(19) Europäisches Patentamt
European Patent Office
Office européen des brevets

(11) **EP 4 398 384 A1**

(12) **EUROPEAN PATENT APPLICATION**
published in accordance with Art. 153(4) EPC

(43) Date of publication:
**10.07.2024 Bulletin 2024/28**

(21) Application number: **22922648.5**

(22) Date of filing: **26.01.2022**

(51) International Patent Classification (IPC):
***H01M 50/102*** (2021.01)

(52) Cooperative Patent Classification (CPC):
**H01M 50/102; Y02E 60/10**

(86) International application number:
**PCT/CN2022/073928**

(87) International publication number:
**WO 2023/141797 (03.08.2023 Gazette 2023/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **XU, Hu
Ningde, Fujian 352100 (CN)**

• **NIU, Shaojun
Ningde, Fujian 352100 (CN)**
• **JIN, Haizu
Ningde, Fujian 352100 (CN)**
• **LI, Xing
Ningde, Fujian 352100 (CN)**
• **ZHAO, Fenggang
Ningde, Fujian 352100 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(54) **BATTERY CELL AND BATTERY**

(57)   The present application relates to a battery cell (10, 20, 30, 40), including a shell (1) and further including three electrode assemblies (JR1, JR2, JR3) wound into cylinders, wherein the three electrode assemblies (JR1, JR2, JR3) are arranged in a row in the shell (1) in such a manner that axes of the three electrode assemblies (JR1, JR2, JR3) are parallel to one another, the shell (1) has a thickness middle surface connected to the axes of the three electrode assemblies (JR1, JR2, JR3), the thickness middle surface is in a V shape, the shell (1) has a first side surface (2) and a second side surface (2) both in an arcuate wavy shape, the first side surface (2) and the second side surface (2) are opposite each other relative to the thickness middle surface of the shell (1), and the three electrode assemblies (JR1, JR2, JR3) are arranged between the first side surface (2) and the second side surface (2). The present application further relates to a battery (100, 200, 300, 400, 500), including a plurality of the battery cells (10, 20, 30, 40) according to the present application. By means of such battery cells (10, 20, 30, 40), the number of the battery cells (10, 20, 30, 40) can be reduced in the battery (100, 200, 300, 400, 500), thereby reducing the number of connectors for connecting the battery cells (10, 20, 30, 40), and fully utilizing the structure space.

FIG. 11

## Description

## TECHNICAL FIELD

The present application relates to the field of batteries, in particular to a battery cell and a battery comprising the battery cell.

## BACKGROUND

Batteries are widely used in electrical devices, for example, the batteries are commonly used in battery electric vehicles, hybrid vehicles, electric bicycles and hand-held electric tools. In the electric vehicles, power batteries, as power sources, can be used for pulling the electric vehicles. Increasing the energy densities of the batteries can effectively increase the charge capacities of the batteries in the same volumes, thereby prolonging the battery lives of the batteries for the battery electric vehicles or the hybrid vehicles.

## SUMMARY

In the research, the inventor of the present application found that in the prior art, a battery is composed of numerous battery cells, thus there are many interfaces among the battery cells, and there are many corresponding connectors and mechanical members for connecting the battery cells in the battery, which is disadvantageous to the cost of the battery. In addition, for the cylindrical battery cells, internal spaces thereof are limited, which is disadvantageous to providing sufficient electrolyte injection spaces or gas production spaces.

An aspect of the present application sets forth a battery cell, comprising a shell and further comprising three electrode assemblies wound into cylinders, wherein the three electrode assemblies are arranged in a row in the shell in such a manner that axes of the three electrode assemblies are parallel to one another, the shell has a thickness middle surface connected to the axes of the three electrode assemblies, the thickness middle surface is in a V shape, the shell has a first side surface and a second side surface both in an arcuate wavy shape, the first side surface and the second side surface are opposite each other relative to the thickness middle surface of the shell, and the three electrode assemblies are arranged between the first side surface and the second side surface.

In some embodiments, the first side surface is located on an outer side of the thickness middle surface, the first side surface comprises two first convex portions, one second convex portion and two first concave portions, the second convex portion is located between the two first concave portions, and the two first convex portions are located on two sides of the two first concave portions; the second side surface is located on an inner side of the thickness middle surface, the second side surface comprises two third convex portions and one second concave portion, and the one second concave portion is arranged between the two third convex portions; each of the first convex portions and the one third convex portion are arranged opposite each other, and one electrode assembly is arranged between each of the first convex portions and the one third convex portion; and the second convex portion and the second concave portion are arranged opposite each other, and one electrode assembly is arranged between the second convex portion and the second concave portion.

In some embodiments, at two ends in the arrangement direction of the electrode assemblies, the shell further comprises two third side surfaces in an protruding arcuate shape, and the two third side surfaces are respectively connected to the first side surface and the second side surface to form an accommodating space for accommodating the electrode assemblies.

In some embodiments, the shell further comprises two end surfaces, the two end surfaces are perpendicular to the thickness middle surface of the shell and close the accommodating space, and at least one of the end surfaces is configured to arrange an electrode terminal of the battery cell.

Another aspect of the present application sets forth a battery, comprising a plurality of battery cells and a box body,

wherein the box body has a first wall;

the battery cell comprises a shell and three electrode assemblies wound into cylinders, the three electrode assemblies are arranged in a row in the shell in such a manner that axes of the three electrode assemblies are parallel to one another, the shell has a thickness middle surface connected to the axes of the three electrode assemblies, the thickness middle surface is in a V shape, the shell has a first side surface and a second side surface both in an arcuate wavy shape, the first side surface and the second side surface are opposite each other relative to the thickness middle surface of the shell, and the three electrode assemblies are arranged between the first side surface and the second side surface;

the thickness middle surface of each of the battery cells comprises a first sub-surface and a second sub-surface which intersect each other; and

the plurality of battery cells are arranged in the box body in the following manner:

the first sub-surface of each of the battery cells is parallel to the first wall, and an extension surface of the second sub-surface of each of the battery cells intersects an extension surface of the first wall.

In some embodiments, in each of the battery cells, the first side surface is located on an outer side of the thickness middle surface, the first side surface comprises two first convex portions, one second convex portion and two first concave portions, the second convex portion is located between the two first concave portions, and the two first convex portions are located on two sides of the two first concave portions; the second side surface is located on an inner side of the thickness middle surface, the second side surface comprises two third convex portions and one second concave portion, and the one second concave portion is arranged between the two third convex portions; each of the first convex portions and the one third convex portion are arranged opposite each other, and one electrode assembly is arranged between each of the first convex portions and the one third convex portion; and the second convex portion and the second concave portion are arranged opposite each other, and one electrode assembly is arranged between the second convex portion and the second concave portion.

In some embodiments, the plurality of battery cells comprise a plurality of battery cell combinations, each of the battery cell combinations comprises two matched battery cells, in the battery cell combination, one first convex portion of each of the battery cells is embedded in the second concave portion of the another battery cell, the first sub-surfaces of the two matched battery cells are parallel to each other, and the second sub-surfaces of the two matched battery cells are parallel to each other.

In some embodiments, the plurality of battery cell combinations are arranged in a column in the direction parallel to the first wall; the plurality of battery cell combinations are arranged in a row in the direction perpendicular to the first wall; and the box body is internally provided with a plurality of rows and columns of battery cell combinations.

In some embodiments, the battery further comprises heat exchange elements, wherein each of the heat exchange elements comprises two heat exchange surfaces in an arcuate wavy shape, and each of two sides of the heat exchange element is provided with one column of battery cell combinations and is in heat exchange cooperation with the corresponding column of battery cell combinations.

In some embodiments, part of the surface of the first side surface of one battery cell of each of the battery cell combinations that is opposite the first sub-surface is in heat exchange cooperation with one heat exchange surface of the corresponding heat exchange element.

In some embodiments, at two ends in the arrangement direction of the electrode assemblies, the shell further comprises two protruding and arcuate third side surfaces, and the two third side surfaces are respectively connected to the first side surface and the second side surface to form an accommodating space for accommodating the electrode assemblies.

In some embodiments, the shell further comprises two end surfaces, the two end surfaces are perpendicular to the thickness middle surface of the shell and close the accommodating space, and at least one of the end surfaces is configured to arrange an electrode terminal of the battery cell.

In some embodiments, the first wall is a bottom wall or a side wall of the box body.

Another aspect of the present application sets forth a battery, comprising a box body and a plurality of battery cells, wherein the plurality of battery cells are arranged in the box body; the battery cell comprises a shell and n electrode assemblies wound into cylinders, $n \geq 2$, these electrode assemblies are arranged in a row in the shell in such a manner that axes of these electrode assemblies are parallel to one another, the shell has two arcuate wavy first side surfaces, the two first side surfaces are opposite each other relative to a thickness middle surface of the shell, the row of electrode assemblies are arranged between the two first side surfaces, the two first side surfaces are respectively provided with convex portions and concave portions in turn, one electrode assembly is arranged between every two opposite convex portions, and every two opposite concave portions are opposite each other at the junction of the two adjacent electrode assemblies; the box body comprises a first wall; and the thickness middle surface of the battery cell is a plane, and an extension surface of the plane intersects an extension surface of the first wall.

In some embodiments, the plane intersects the first wall at an acute angle, and preferably, the acute angle is in a range of 45° - 75°.

In some embodiments, the battery further comprises a heat exchange element, wherein the heat exchange element comprises two heat exchange surfaces in an arcuate wavy shape, and two sides of the heat exchange element are respectively provided with the battery cells; and one first side surface of each of the battery cells is in heat exchange cooperation with one heat exchange surface of the heat exchange element.

In some embodiments, planes where lower edges, facing the first wall, of the two battery cells on the two sides of the heat exchange elements are located are parallel to the first wall.

In some embodiments, the first wall is a bottom wall or a side wall of the box body.

In some embodiments, the electrode assemblies may have the same diameter.

In some embodiments, each of the shells may have a dimensional relationship according to the following formula:

$$W = n * (T + c),$$

wherein W represents the maximum length of the shell in the arrangement direction of the electrode assemblies, n represents the number of the electrode assemblies, T represents the maximum thickness of the shell between the two side surfaces in millimeters, c represents a con-

stant in millimeters, $c \in [0, 10]$, and $T \in [15, 100]$.

In some embodiments, the number of the electrode assemblies of each of the battery cells is as follows: $n \in [2, 10]$, and preferably, $n \in [2, 5]$.

In some embodiments, the battery may have the following features:

the number of the battery cells is as follows: n = 3, and the thickness middle surfaces of the battery cells extend in a curved manner;

the battery cells in each row are arranged in an aligned manner, and in every two adjacent battery cells in each row, the end section of one of the battery cells that comprises one electrode assembly on the outer side is next to the central section of the other battery cell that comprises one central electrode assembly;

the battery cells in every two adjacent rows are oriented in such a manner that the battery cells are turned by 180° relative to each other;

in every two battery cells with side surfaces of inner sides of the curved thickness middle surfaces arranged opposite each other, the two battery cells match with each other by means of the respective end sections and the respective central concave portions; and

in every two battery cells with side surfaces of outer sides of the curved thickness middle surfaces arranged opposite each other, the two battery cells match with each other by means of the respective convex portions and the respective concave portions.

The above description is only an overview of the technical solutions of the present application. In order to understand the technical means of the present application more clearly, operations can be performed according to the content of the specification. In addition, in order to make the above-mentioned and other purposes, features and advantages of the present application more obvious and easier to understand, the detailed description of the preferred embodiments of the present application is listed below.

**BRIEF DESCRIPTION OF THE DRAWINGS**

By reading the detailed descriptions of the preferred embodiments below, various advantages and benefits would have been clear to those of ordinary skill in the art. The drawings are only for the purpose of showing the preferred embodiments, and are not intended to restrict the present application. In addition, in all the drawings, the same reference numerals are used for indicating the same components. In the drawings:

FIG. 1 and FIG. 2 are a front view and a cross-section view of a battery cell according to the first embodiment of the present application.

FIG. 3 is a front view of a battery cell 20 according to the second embodiment of the present application.

FIG. 4 is a cross-section view of a battery cell 30 according to the third embodiment of the present application.

FIG. 5 is a cross-section view of a battery cell 40 according to the fourth embodiment of the present application.

FIG. 6 is a top view of a battery 100 according to the first embodiment of the present application.

FIG. 7 is a top view of a battery 200 according to the second embodiment of the present application.

FIG. 8 is a top view of a battery 300 according to the third embodiment of the present application.

FIG. 9 is a sectional view along a section line A-A in FIG. 8.

FIG. 10 is a sectional view, similar to FIG. 9, of a battery 400 according to the fourth embodiment of the present application.

FIG. 11 is a top view of a battery 500 according to the fifth embodiment of the present application.

FIGS. 12-18 are schematic diagrams of battery cells according to different embodiments.

FIG. 19 is a schematic cross-section view of a heat exchange element according to one embodiment.

**DETAILED DESCRIPTION OF THE EMBODIMENTS**

Embodiments of the technical solutions of the present application will be described in detail below in conjunction with the drawings. The embodiments below are only for the purpose of more clearly illustrating the technical solutions of the present application, and therefore only serve as examples and cannot be used to limit the scope of protection of the present application.

Unless otherwise specified, all technical and scientific terms used herein have the same meanings as those commonly understood by those skilled in the art of the present application. The terms used herein are only for the purpose of describing the particular embodiments, and are not intended to limit the present application. The terms "comprising" and "being provided with" and their variants in the description and the claims of the present application and the brief description of the drawings above are intended to cover non-exclusive inclusions.

In the description of the embodiments of the present application, the technical terms "first", "second" and the like are only for the purpose of distinguishing different objects, and cannot be understood as indicating or implying the relative importance or implicitly indicating the number, the specific sequence or the priority of the indicated technical features. In the description of the embodiments of the present application, unless otherwise specified, "a plurality of" means two or more.

The reference to "embodiments" herein means the specific features, structures or characteristics described in conjunction with the embodiments may be included in at least one embodiment of the present application. The phrase appearing at each position of the description does not necessarily indicate the same embodiment, and it is not an exclusively independent or alternative embodiment of other embodiments. Those skilled in the art should explicitly or implicitly understand that the embodiments described herein may be combined with other embodiments.

In the description of the embodiments of the present application, the term "and/or" is only intended to describe association relationships of associated objects, and indicates that there may be three relationships, for example, the expression of "A and/or B" may indicate the following three conditions: A exists separately, A and B exist at the same time, and B exists separately. In addition, the character "/" herein generally indicates that the associated objects have an "or" relationship.

In the description of the embodiments of the present application, the term "a plurality of " means two or more (including two), by the same reasoning, "a plurality of groups" means two or more groups (including two groups), and "a plurality of sheet" means two or more sheets (including two sheets).

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships based on the drawings, are only for the purpose of facilitating describing of the embodiments of the present application and simplifying the description, and do not indicate or imply that the indicated devices or elements must have specific orientations or be constructed and operated in specific orientations. Therefore, they cannot be understood as limitations on the embodiments of the present application.

In the description of the embodiments of the present application, unless otherwise explicitly specified and limited, the technical terms "mounting", "connecting", "connection", "fixing" and the like should be understood in a broad sense, for example, they may be fixed connection, and may also be detachable connection or integrated connection; they may be mechanical connection, and may also be electrical connection; and they may be direct connection, may also be indirect connection by means of intermediate media, and may also be communication of the interiors of two elements or the interactive relationship of two elements. For those of ordinary skill in the art, the specific meanings of the above terms in the embodiments of the present application may be understood according to specific circumstances.

At present, in view of the development of the market situation, power batteries are used increasingly widely. The power batteries are used in energy storage power systems such as hydropower, thermal power, wind power and solar power plants, and are also widely used in electric transport such as electric bicycles, battery-operated motor cycles and electric vehicles, as well as in various fields such as military equipment and aerospace. With the continuous expansion of the application field of the power batteries, the market demand thereof is also constantly increased.

A battery cell disclosed in an embodiment of the present application can be used to, but not limited to, electrical devices such as vehicles, ships or aircrafts. A power system provided with the electrical device comprising the battery cell and a battery disclosed in the present application can be used.

An embodiment of the present application further provides an electrical device using the battery as a power source, and the electrical device can be, but not limited to, a mobile phone, a tablet computer, a laptop, an electric toy, an electric tool, a storage battery car, an electric vehicle, a steamship and an aircraft. The electric toy may be a fixed or movable electric toy, for example, a game machine, an electric vehicle toy, an electric steamship toy and an electric airplane toy, and the aircraft may be an airplane, a rocket, a space shuttle and a spacecraft.

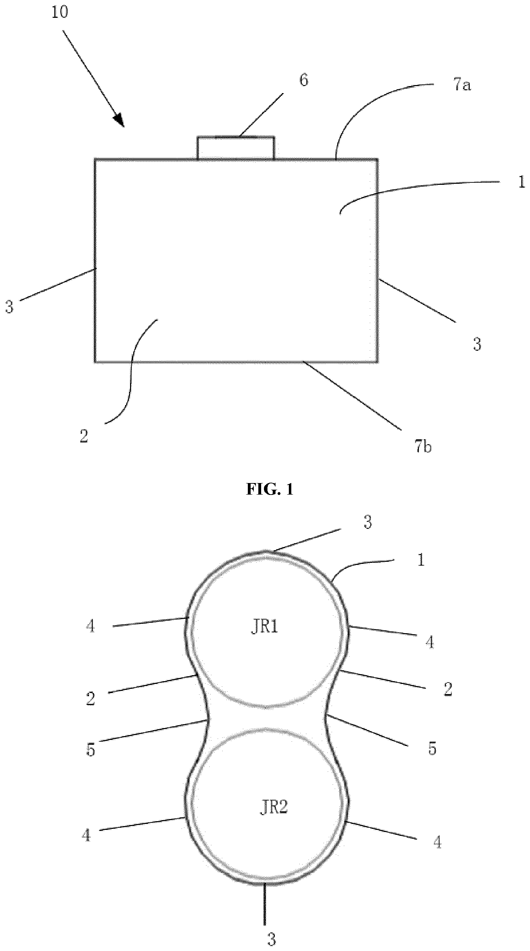

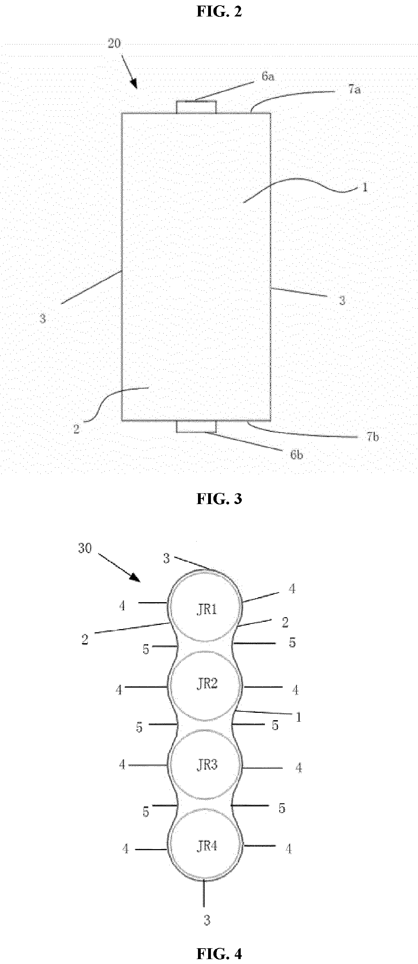

FIG. 1 and FIG. 2 are a front view and a cross-section view of a battery cell 10 according to the first embodiment of the present application. The battery cell 10 comprises a shell 1 and two electrode assemblies JR1, JR2 wound into cylinders, wherein the two electrode assemblies JR1, JR2 are arranged in a row in the shell 1 in such a manner that axes of the two electrode assemblies are parallel to each other, and the two electrode assemblies may have the same diameter. The shell 1 has two arcuate wavy first side surfaces 2. At two ends in the arrangement direction of the two electrode assemblies JR1, JR2, the shell 1 further comprises two protruding and arcuate second side surfaces 3, and the two second side surfaces 3 are connected to the two first side surfaces 2 to form an accommodating space for accommodating the two electrode assemblies JR1, JR2. The two first side surfaces 2 are opposite each other, particularly symmetric with each other relative to a thickness middle surface of the shell 1, and the thickness middle surface is a plane comprising the longitudinal axes of the two electrode assemblies JR1, JR2. The two electrode assemblies JR1, JR2 are arranged between the two first side surfaces 2, the two first side surfaces 2 are respectively provided with alternating convex portions 4 and concave portions 5, one electrode assembly is arranged between every two opposite convex portions 4 of the two first side surfaces 2, and the two opposite concave portions 5 are opposite each other at the junction of the two adjacent electrode assemblies JR1, JR2.

The shell 1 further comprises two end surfaces 7a, 7b, and the two end surfaces are perpendicular to the thickness middle surface of the shell 1 or the longitudinal axes of the two electrode assemblies JR1, JR2 and close the accommodating space. As shown in FIG. 1, the end surface 7a is provided with one electrode terminal of the battery cell 10, for example, a positive terminal, and the end surface 7b can serve as a negative pole of the battery cell 10. In embodiments not shown, the end surface 7a can be provided with two electrode terminals of the battery cell 10, that is, a positive terminal and a negative terminal.

In the embodiment as shown in FIG. 1 and FIG. 2, the height of the shell 1, that is, the distance between the two end surfaces 7a, 7b, may be 60-180 mm. The shell 1 may have a dimensional relationship according to the following formula:

$$W = 2 * (T + c),$$

wherein W represents the maximum length of the shell 1 in the arrangement direction of the electrode assemblies JR1, JR2 in millimeters, T represents the maximum thickness of the shell 1 between the two first side surfaces 2 in millimeters, c represents a constant in millimeters, $c \in [0, 10]$, and $T \in [15, 100]$. As shown in FIG. 2, the parameter T may be slightly larger than the diameter of the electrode assemblies, and the parameter W may be slightly larger than twice the diameter.

Compared with a battery cell provided with one cylindrical electrode assembly, the battery cell 10 provided with the two electrode assemblies JR1, JR2 according to the first embodiment has the effects that under the condition of the same electric capacity, the number of the battery cells of a battery can be halved, and correspondingly, connectors and mechanical members for connecting the battery cells in a battery shell can be remarkably reduced, which can simplify the manufacturing process of the battery and reduce the manufacturing cost. In addition, a space between the two cylindrical electrode assemblies JR1, JR2 serves as an internal space of the battery cell, can serve as an additional electrolyte injection space, and can effectively buffer and retain gas generated during the working process of the battery cell.

FIG. 3 is a front view of a battery cell 20 according to the second embodiment of the present application. The battery cell 20 may has a cross section as shown in FIG. 2. The differences between the second embodiment and the first embodiment as shown in FIGS. 1 and 2 may mainly lie in: the battery cell 20 has a relatively large height, a shell of the battery cell 20 may have a height of 150-1500 mm, for example, 200-1000 mm, and preferably, 300-600 mm; and two end surfaces 7a, 7b of the shell of the battery cell are provided with electrode terminals 6a, 6b respectively. The battery cell 20 according to the second embodiment may have the advantages similar to those of the battery cell 10 according to the first embodiment.

FIG. 4 is a cross-section view of a battery cell 30 according to the third embodiment of the present application. In the third embodiment, the battery cell 30 comprises a shell 1 and four electrode assemblies JR1, JR2, JR3, JR4 wound into cylinders, wherein these electrode assemblies are arranged in a row in the shell 1 in such a manner that axes of these electrode assemblies are parallel to each other, and the electrode assemblies may have the same diameter. The shell 1 has two arcuate wavy first side surfaces 2. At two ends in the arrangement direction of these electrode assemblies, the shell 1 further comprises two protruding and arcuate second side surfaces 3, and the two second side surfaces 3 are connected to the two first side surfaces 2 to form an accommodating space for accommodating these electrode assemblies. The two first side surfaces 2 are opposite each other, particularly symmetric with each other relative to a thickness middle surface of the shell 1, and the thickness middle surface is a plane comprising the longitudinal axes of the electrode assemblies. These electrode assemblies are arranged between the two first side surfaces 2, the two first side surfaces 2 are respectively provided with alternating convex portions 4 and concave portions 5, one electrode assembly is arranged between every two opposite convex portions 4 of the two first side surfaces 2, and every two opposite concave portions 5 are opposite each other at the junction of every two adjacent electrode assemblies.

Identical with or similar to the first embodiment or the second embodiment, the shell 1 of the battery cell 30 further comprises two end surfaces, the two end surfaces are perpendicular to the thickness middle surface of the shell 1 or the longitudinal axes of the electrode assemblies and close the accommodating space, and one of the two end surfaces or the two end surfaces can be provided with electrode terminals.

In the third embodiment, the height of the shell 1 of the battery cell 30, that is, the distance between the two end surfaces, may be similar to the situation as shown in FIG. 1, which is 60-180 mm; or the height may be similar to the situation as shown in FIG. 3, which is 150-1500 mm. The shell 1 of the battery cell 30 may have a dimensional relationship according to the following formula:

$$W = 4 * (T + c),$$

wherein W represents the maximum length of the shell 1 in the arrangement direction of the electrode assemblies JR1, JR2, JR3, JR4 in millimeters, T represents the maximum thickness of the shell 1 between the two first side surfaces 2 in millimeters, c represents a constant in millimeters, $c \in [0, 10]$, and $T \in [15, 100]$. As shown in FIG. 2, the parameter T may be slightly larger than the diameter of the electrode assemblies, and the parameter W may be slightly larger than four times the diameter.

Compared with the battery cell provided with one cylindrical electrode assembly, the battery cell 30 provided with the four electrode assemblies according to the third embodiment has the effects that under the condition of the same electric capacity, the number of the battery cells of a battery can be reduced to 1/4, and correspondingly, connectors and mechanical members for connecting the battery cells in a battery shell can be remarkably reduced, which can simplify the manufacturing process of the battery and reduce the manufacturing cost. In addition, a space among the cylindrical electrode assemblies serves as an internal space of the battery cell, can serve as an additional electrolyte injection space, and can effectively buffer and retain gas generated during the working process of the battery cell.

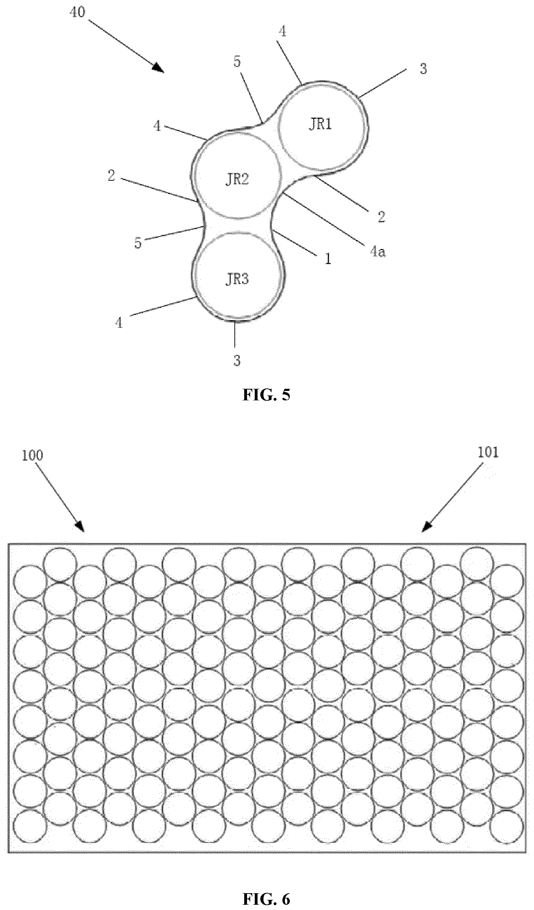

FIG. 5 is a cross-section view of a battery cell 40 according to the fourth embodiment of the present application. The battery cell 10 comprises a shell 1 and three electrode assemblies JR1, JR2, JR3 wound into cylinders, wherein the three electrode assemblies JR1, JR2, JR3 are arranged in a row in the shell 1 in such a manner that axes of the three electrode assemblies are parallel to each other, and the three electrode assemblies may have the same diameter. The shell 1 has first and second side surfaces 2 both in an arcuate wavy shape. At two ends in the arrangement direction of the two electrode assemblies JR1, JR2, the shell 1 further comprises two protruding and arcuate third side surfaces 3, and the two third side surfaces 3 are connected to the first and second side surfaces 2 to form an accommodating space for accommodating the three electrode assemblies JR1, JR2, JR3. The first and second side surfaces 2 are opposite each other relative to a thickness middle surface of the shell 1. Different from the aforementioned embodiments, in the fourth embodiment, the thickness middle surface of the battery cell 40 is a curved surface comprising the longitudinal axes of the three electrode assemblies JR1, JR2, JR3, and the curved surface comprises a plane comprising the longitudinal axes of the two electrode assemblies JR1, JR2 and a plane comprising the longitudinal axes of the two electrode assemblies JR2, JR3. In other words, the thickness middle surface is in a V shape, and the thickness middle surface comprises a first sub-surface and a second sub-surface which intersect each other. The three electrode assemblies JR1, JR2, JR3 are arranged between the first and second side surfaces 2, the first side surface 2 on an outer side of the curved surface is provided with alternating convex portions 4 and concave portions 5, more specifically, the first side surface comprises two first convex portions, a second convex portion and two first concave portions, the second convex portion is located between the two first concave portions, and the two first convex portions are located on two sides of the two first concave portions. In the shell 1, each of the convex portions 4 on the first side surface 2 on the outer side of the curved surface corresponds to one electrode assembly. Each of the first concave portions on the first side surface 2 on the outer side of the curved surface is located at the junction of the two adjacent electrode assemblies. In the fourth embodiment as shown in FIG. 5, the second side surface 2 on an inner side of the shell 1 of the battery cell 40 is provided with a unique central concave portion 4a. More specifically, the second side surface is located on the inner side of the thickness middle surface, the second side surface comprises two third convex portions and a second concave portion, and the second concave portion is arranged between the two third convex portions.

Identical with or similar to the first embodiment or the second embodiment, the shell 1 of the battery cell 40 further comprises two end surfaces, the two end surfaces are perpendicular to the thickness middle surface of the shell 1 or the longitudinal axes of the electrode assemblies and close the accommodating space, and one of the two end surfaces or the two end surfaces can be provided with electrode terminals.

In the fourth embodiment, the height of the shell 1 of the battery cell 40, that is, the distance between the two end surfaces, may be similar to the situation as shown in FIG. 1, which is 60-180 mm; or the height may be similar to the situation as shown in FIG. 3, which is 150-1500 mm. The shell 1 of the battery cell 40 may have a dimensional relationship according to the following formula:

$$W = 3 * (T + c),$$

wherein W represents the maximum length of the shell 1 in the arrangement direction of the electrode assemblies JR1, JR2, JR3 in millimeters, that is, the sum of the maximum distance between the longitudinal axis of the electrode assembly JR2 and one of the third side surfaces and the maximum distance between the longitudinal axis of the electrode assembly JR2 and the other third side surface, T represents the maximum thickness of the shell 1 between the first and second side surfaces 2 in millimeters, c represents a constant in millimeters, $c \in [0, 10]$, and $T \in [15, 100]$. As shown in FIG. 5, the parameter T may be slightly larger than the diameter of the electrode assemblies, and the parameter W may be slightly larger than three times the diameter.

Compared with the battery cell provided with one cylindrical electrode assembly, the battery cell 40 provided with the three electrode assemblies according to the fourth embodiment has the effects that under the condition of the same electric capacity, the number of the battery cells of a battery can be reduced to 1/3, and correspondingly, connectors and mechanical members for connecting the battery cells in a battery shell can be remarkably reduced, which can simplify the manufacturing process of the battery and reduce the manufacturing cost. In addition, a space among the cylindrical electrode assemblies serves as an internal space of the battery cell, can serve as an additional electrolyte injection space, and can effectively buffer and retain gas generated during the working process of the battery cell.

FIG. 6 is a top view of a battery 100 according to the first embodiment of the present application. The battery 100 comprises a battery shell 201, wherein the battery shell comprises a box body and a cover plate, and the box body is provided with a bottom plate opposite the cover plate. The cover plate of the battery shell is omitted in FIG. 6, thereby facilitating observing battery cells in the battery shell. These battery cells may be the battery cells 10 according to the first embodiment as shown in FIGS. 1 and 2, or the battery cells 20 according to the second embodiment as shown in FIG. 3. In FIG. 6, the battery cells are simplified, and only the contour lines of the battery cells are described.

The battery cells of the battery 100 stand on the bottom plate of the box body of the battery shell 201 to be arranged in rows and columns. The battery cells in each row are staggered with each other, so that concave portions and convex portions of each of the battery cells match with convex portions and concave portions of the adjacent battery cell; and the battery cells in each column are aligned to each other, in other words, the thickness middle surfaces of the battery cells in each column are located on the same plane. In the battery 100, the arrangement direction of the battery cells in each row corresponds to the lengthwise direction of the rectangular battery shell, the arrangement direction of the battery cells in each column corresponds to the widthwise direction of the rectangular battery shell, the height direction of the battery cells corresponds to the height direction of the rectangular battery shell, and width middle surfaces of the battery cells are parallel to the widthwise direction of the battery shell.

In embodiments not shown, the battery 100 may further comprise planar heat exchange elements, wherein each of the heat exchange elements comprises two arcuate wavy heat exchange surfaces. The heat exchange elements may be flexible elements filled with cooling liquids, or thin metal sheets having good thermal conductivity.

For example, the heat exchange elements may be arranged in the battery in the following manners:

1) one heat exchange element is arranged between every two adjacent columns of the battery, the heat exchange element is in planar contact with every battery cell in the two columns, and the arcuate wavy shape of the heat exchange element matches with the arcuate wavy shapes of the battery cells; and the number of the heat exchange elements here may be obtained by subtracting one from the number of columns of the battery cells;

2) every two columns of battery cells match with one heat exchange element, one heat exchange element is arranged between the first column and the second column, no heat exchange element is arranged between the second column and the third column, one heat exchange element is arranged between the third column and the fourth column, and so on; and

3) one heat exchange element is arranged between every two adjacent rows of the battery. There are four rows of battery cells in the battery 100 as shown in FIG. 6, and therefore three heat exchange elements can be arranged. Two wavy surfaces of each of the arcuate wavy heat exchange elements may exchange heat with and match with arcuate second side surfaces of the two matched rows of battery cells.

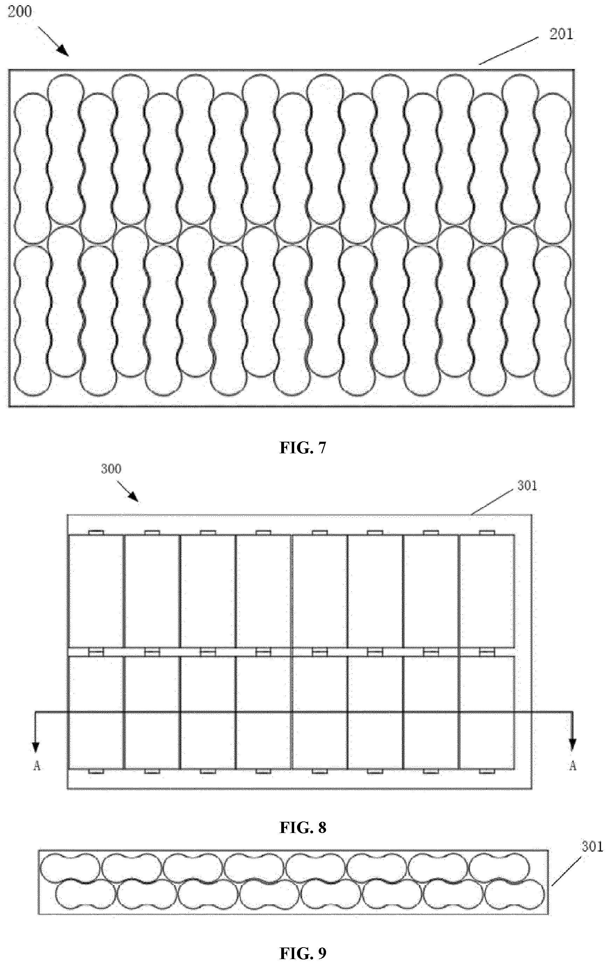

FIG. 7 is a top view of a battery 200 according to the second embodiment of the present application. FIG. 7 is a view similar to FIG. 6. A battery shell 201 of the battery 200 may be constructed in the same way as the battery shell 101 of the battery 100 according to the first embodiment as shown in FIG. 6. In the battery 200, battery cells may be the battery cells 30 according to the third embodiment as shown in FIG. 3. In FIG. 7, the battery cells are simplified, and only the contour lines of the battery cells are described.

The battery cells of the battery 200 stand on a bottom plate of a box body of the battery shell 201 to be arranged in rows and columns. The battery cells in each row are staggered with each other, so that concave portions and convex portions of each of the battery cells match with convex portions and concave portions of the adjacent battery cell; and the battery cells in each column are aligned to each other, in other words, the thickness middle surfaces of the battery cells in each column are located on the same plane. In the battery 200, the arrangement direction of the battery cells in each row corresponds to the lengthwise direction of the rectangular battery shell, the arrangement direction of the battery cells in each column corresponds to the widthwise direction of the rectangular battery shell, the height direction of the battery cells corresponds to the height direction of the rectangular battery shell, and width middle surfaces of the battery cells are parallel to the widthwise direction of the battery shell.

The battery 200 may also be provided with arcuate wavy heat exchange elements, and particularly, the heat exchange elements may be arranged between every two adjacent columns.

FIG. 8 is a top view of a battery 300 according to the third embodiment of the present application, and FIG. 9 is a sectional view along a section line A-A in FIG.

8. In FIG. 9, the battery cells are simplified, and only the contour lines of the battery cells are described. The battery 300 comprises a battery shell 301, wherein the battery shell comprises a box body and a cover plate, and the box body is provided with a bottom plate opposite the cover plate. The cover plate of the battery shell 301 is omitted in FIG. 8, thereby facilitating observing battery cells in the battery shell. These battery cells may be the battery cells 20 according to the second embodiment as shown in FIG. 3.

The battery cells of the battery 300 are horizontally arranged in the box body of the battery shell 301, the height direction of the battery cells corresponds to the widthwise direction of the rectangular battery shell, and thickness middle surfaces of the battery cells are parallel to the bottom plate of the box body of the battery shell. As shown in FIG. 8 and FIG. 9, the battery 300 comprises two layers of battery cells, each layer comprises two rows of battery cells, and the thickness middle surfaces of the battery cells are located on the same plane. Through observation in the widthwise direction of the battery shell, every two battery cells are connected in series. As shown in FIG. 9, through observation in the height direction of the battery shell, the upper and lower layers of battery cells are staggered with each other, so that respective concave portions and convex portions of the battery cells on the upper layer match with corresponding convex portions and concave portions of the battery cells on the lower layer.

The battery 300 may be provided with an arcuate wavy heat exchange element, and the heat exchange element may be arranged between the upper and lower layers of battery cells. The heat exchange element may be in planar contact with the battery cells of the battery 300.

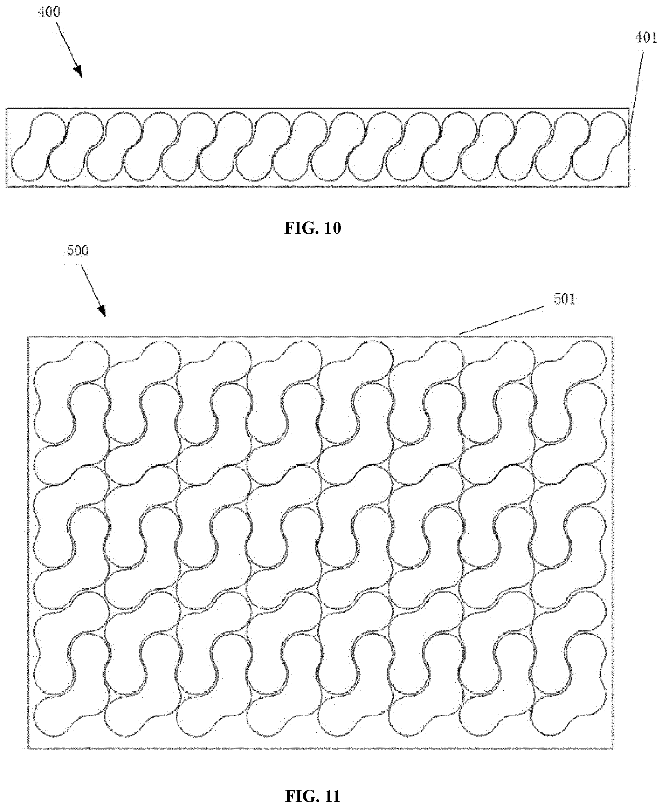

FIG. 10 is a sectional view, similar to FIG. 9, of a battery 400 according to the fourth embodiment of the present application. Similar to FIG. 8, the battery 400 also comprises two rows of battery cells in the widthwise direction of a battery shell 401, and FIG. 10 depicts a vertical sectional view of one of the two rows of battery cells. There is only one layer of battery cells in the height direction of the rectangular battery shell of the battery 400. The battery cells are obliquely arranged relative to a bottom plate of a box body of the battery shell, the height direction of the battery cells corresponds to the widthwise direction of the battery shell, and thickness middle surfaces of the battery cells and the bottom plate form an angle of about 60°. Convex portions and concave portions of one of the battery cells match with concave portions and convex portions of the adjacent battery cells. The plane where lower edges of the battery cells are located is parallel to the bottom plate.

In the battery 400, every two battery cells may match with one arcuate wavy heat exchange element, one heat exchange element is arranged between the first and second battery cells, no heat exchange element is arranged between the second and third battery cells, one heat exchange element is arranged between the third and fourth battery cells, and so on.

FIG. 11 is a top view of a battery 500 according to the fifth embodiment of the present application. The battery 500 comprises a battery shell 501, wherein the battery shell comprises a box body and a cover plate, and the box body is provided with a bottom plate opposite the cover plate. The cover plate of the battery shell 501 is omitted in FIG. 11, thereby facilitating observing battery cells in the battery shell. These battery cells may be the battery cells 40 according to the fourth embodiment as shown in FIG. 5. In FIG. 11, the battery cells are simplified, and only the contour lines of the battery cells are described. The battery cells of the battery 500 stand on the bottom plate of the box body of the battery shell.

In the battery 500, the battery cells in each row are arranged in an aligned manner, and in every two adjacent battery cells in each row, the end section of one of the battery cells that comprises one electrode assembly on the outer side is next to the central section of the other battery cell that comprises one central electrode assembly. The battery cells in every two adjacent rows are oriented in such a manner that the battery cells are turned by 180° relative to each other. In every two battery cells with side surfaces of inner sides of the curved thickness middle surfaces arranged opposite each other, the two battery cells match with each other by means of the respective end sections and the respective central concave portions. in every two battery cells with side surfaces of outer sides of the curved thickness middle surfaces arranged opposite each other, the two battery cells match with each other by means of the respective convex portions and the respective concave portions.

In other words, in the embodiment as shown in FIG. 11, the battery 500 comprises a plurality of battery cell combinations, each of the battery cell combinations comprises two matched battery cells, in the battery cell combination, one of first convex portions of one of the battery cells is embedded in a second concave portion of the other battery cell, first sub-surfaces of the two matched battery cells are parallel to each other, and second sub-surfaces of the two matched battery cells are parallel to each other. The plurality of battery cell combinations may be arranged in a column in the direction parallel to the first wall; the plurality of battery cell combinations are arranged in a row in the direction perpendicular to the first wall; and the battery comprises a plurality of rows and columns of the battery cell combinations.

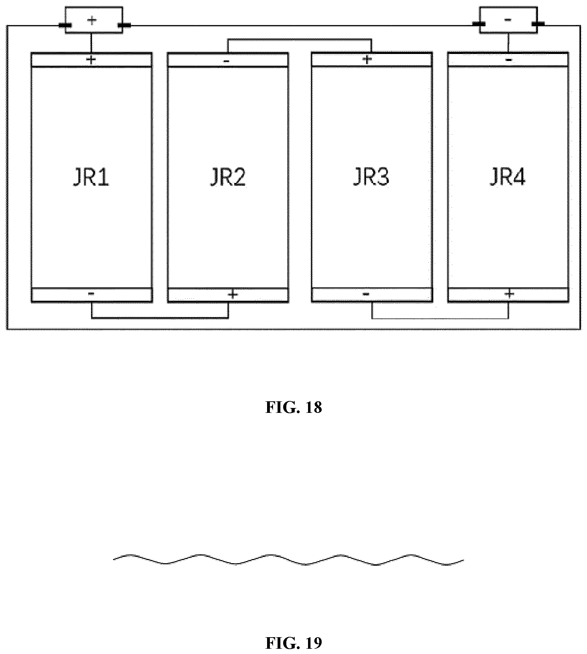

In the battery 500, one heat exchange element may be arranged between every two adjacent columns, and the arcuate wavy shape of the heat exchange element may match with the arcuate wavy shapes of the two matched columns. More specifically, each of the heat exchange elements may comprise two arcuate wavy heat exchange surfaces, and each of two sides of the heat exchange element is provided with one column of battery cell combinations and is in heat exchange cooperation with the corresponding column of battery cell combinations. In particular, part of the surface of the first side surface of one of the battery cells of each of the battery cell combinations that is opposite the corresponding first sub-surface is in heat exchange cooperation with one of the heat exchange surfaces of the corresponding heat exchange element. Refer to exemplary FIG. 19 for the arcuate wavy cross section of the heat exchange element. The number of convex portions and concave portions of the heat exchange elements here may match with the configuration and arrangement of the battery cells of the battery.

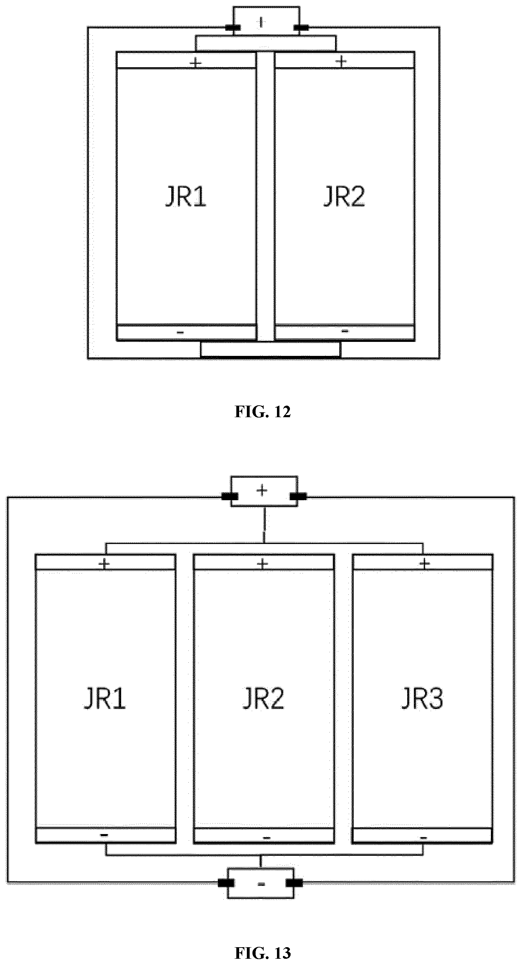

In the battery cells according to the embodiments of the present application, the electrode assemblies of the battery cells may be connected in series or in parallel. Different embodiments for electrical connection of the electrode assemblies of the battery cells are illustrated below with reference to FIG. 12-FIG. 18, and these embodiments may be independent of or combined with the aforementioned embodiments of the battery cells.

FIG. 12 is a schematic diagram of a battery cell according to one embodiment. The battery cell comprises two parallel electrode assemblies JR1, JR2. Positive pole tabs of the two electrode assemblies are in contact with a positive pole adapter piece for conduction, then the positive pole adapter piece is in contact with a positive pole terminal for conduction, a shell 1 of the battery cell is mechanically connected to the positive pole terminal by means of insulating plastic on an end surface 7a and is electrically insulated. Negative pole tabs of the two electrode assemblies are in contact with a negative pole adapter piece for conduction, and then the negative pole adapter piece is in contact with an end surface 7b of the shell of the battery cell for conduction. An electrical connection structure as shown in FIG. 12 may be applied to the battery cell 10 as shown in FIG. 1 and FIG. 2.

FIG. 13 is a schematic diagram of a battery cell according to one embodiment. The battery cell comprises three parallel electrode assemblies JR1, JR2, JR3. Positive pole tabs of these electrode assemblies are in contact with a positive pole terminal for conduction by means of a positive pole adapter piece not shown, and a shell 1 of the battery cell is mechanically connected to the positive pole terminal by means of insulating plastic on an end surface 7a and is electrically insulated. Negative pole tabs of these electrode assemblies are in contact with a negative pole terminal for conduction by means of a negative pole adapter piece not shown, and the shell 1 of the battery cell is mechanically connected to the negative pole terminal by means of insulating plastic on an end surface 7b and is electrically insulated. An electrical connection structure as shown in FIG. 13 may be applied to the battery cell 40 as shown in FIG. 5.

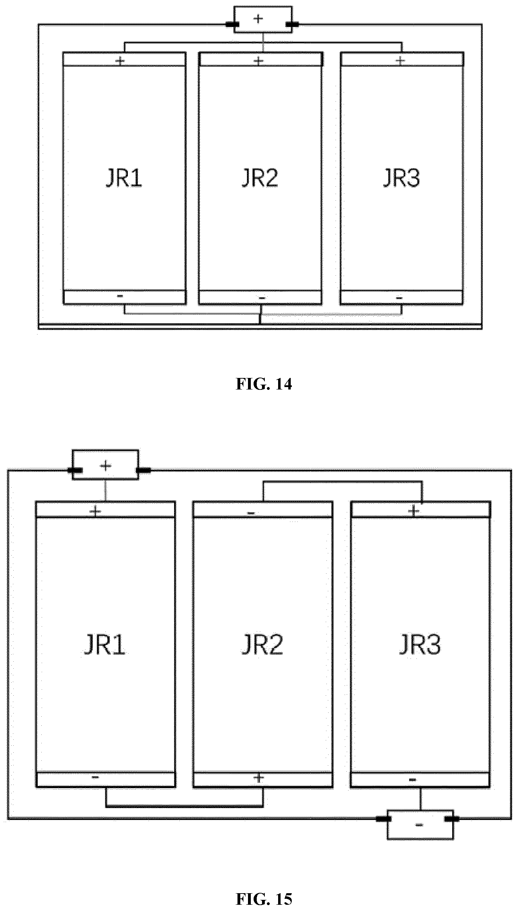

FIG. 14 is a schematic diagram of a battery cell according to one embodiment. The battery cell comprises three parallel electrode assemblies JR1, JR2, JR3. Positive pole tabs of these electrode assemblies are in contact with a positive pole terminal for conduction by means of a positive pole adapter piece not shown, and a shell 1 of the battery cell is mechanically connected to the positive pole terminal by means of insulating plastic on an end surface 7a and is electrically insulated. Negative pole tabs of these electrode assemblies are in contact with an end surface 7b of the shell 1 of the battery cell for conduction by means of a negative pole adapter piece not shown. An electrical connection structure as shown in FIG. 13 may be applied to the battery cell 40 as shown in FIG. 5.

FIG. 15 is a schematic diagram of a battery cell according to one embodiment. The battery cell comprises three electrode assemblies JR1, JR2, JR3 connected in series. A positive pole tab of the electrode assembly JR1 is in contact with a positive pole terminal for conduction by means of a positive pole adapter piece not shown, and a shell 1 of the battery cell is mechanically connected to the positive pole terminal by means of insulating plastic on an end surface 7a and is electrically insulated. A negative pole tab of the electrode assembly JR3 is in contact with a negative pole terminal for conduction by means of a negative pole adapter piece not shown, and the shell 1 of the battery cell is mechanically connected to the negative pole terminal by means of insulating plastic on an end surface 7b and is electrically insulated.

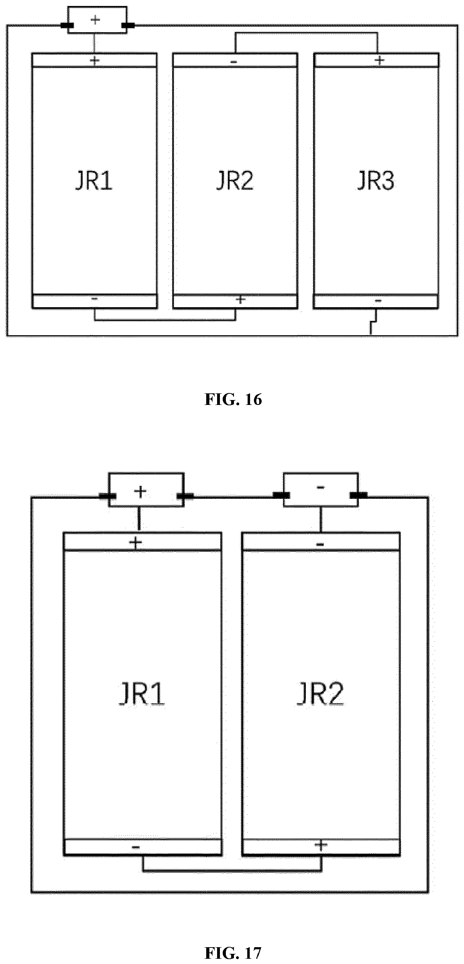

FIG. 16 is a schematic diagram of a battery cell according to one embodiment. The battery cell comprises three electrode assemblies JR1, JR2, JR3 connected in series. A positive pole tab of the electrode assembly JR1 is in contact with a positive pole terminal for conduction by means of a positive pole adapter piece not shown, and a shell 1 of the battery cell is mechanically connected to the positive pole terminal by means of insulating plastic on an end surface 7a and is electrically insulated. A negative pole tab of the electrode assembly JR3 is in contact with an end surface 7b of the shell 1 of the battery cell for conduction by means of a negative pole adapter piece not shown.

FIG. 17 is a schematic diagram of a battery cell according to one embodiment. The battery cell comprises two electrode assemblies JR1, JR2 connected in series. A positive pole tab of the electrode assembly JR1 is in contact with a positive pole terminal for conduction by means of a positive pole adapter piece not shown, a negative pole tab of the electrode assembly JR2 is in contact with a negative pole terminal for conduction by means of a negative pole adapter piece not shown, and a shell 1 of the battery cell is mechanically connected to the positive pole terminal and the negative pole terminal by means of insulating plastic on the same end surface 7a and is electrically insulated.

FIG. 18 is a schematic diagram of a battery cell according to one embodiment. The battery cell comprises four electrode assemblies JR1, JR2, JR3, JR4 connected in series. A positive pole tab of the electrode assembly JR1 is in contact with a positive pole terminal for conduction by means of a positive pole adapter piece not shown, a negative pole tab of the electrode assembly JR4 is in contact with a negative pole terminal for conduction by means of a negative pole adapter piece not shown, and a shell 1 of the battery cell is mechanically connected to the positive pole terminal and the negative pole terminal by means of insulating plastic on the same end surface 7a and is electrically insulated.

Under the condition that the electrode assemblies of the battery cell are connected in series, the outside of each of the electrode assemblies may be sealed by means of an insulating material, an electrolyte is injected into the electrode assembly, and the electrode assembly is isolated from the internal electrolyte of the electrode assembly.

FIG. 19 is a schematic cross-section view of a heat exchange element according to one embodiment. The number of convex portions and concave portions of the heat exchange element may match with the configuration and arrangement of battery cells of a battery. For example, when one wavy heat exchange element is arranged between two adjacent columns (as shown in FIG. 6, each row comprises eight electrode assemblies in total) of the battery 100 as shown in FIG. 6, the heat exchange element may comprise eight convex portions and eight concave portions in turns, so that the side surfaces of the battery cells in each column that face the heat exchange element may well match with a corresponding side surface of the heat exchange element in a heat conduction manner.

Finally, it should be noted that the above embodiments are only for illustrating the technical solutions of the present application, and are not limitations; although the present application is illustrated in detail with reference to the above-mentioned embodiments, those of ordinary skill in the art should understand that they can still amend the technical solutions recited in the above-mentioned embodiments, or perform equivalent substitutions on part or all of the technical features thereof; and such amendments or substitutions do not make the essence of the corresponding technical solutions depart from the scope of the technical solutions of the embodiments of the present application, and should fall within the scope of the claims and specification of the present application. Particularly, as long as there is no structural conflict, the technical features mentioned in the embodiments can be combined in any manner. The present application is not restricted to particular embodiments disclosed herein, but to comprise all technical solutions falling in the scope of the claims.

**Claims**

1. A battery cell, comprising a shell and further comprising three electrode assemblies wound into cylinders, wherein the three electrode assemblies are arranged in a row in the shell in such a manner that axes of the three electrode assemblies are parallel to one another, the shell has a thickness middle surface connected to the axes of the three electrode assemblies, the thickness middle surface is in a V shape, the shell has a first side surface and a second side surface both in an arcuate wavy shape, the first side surface and the second side surface are opposite each other relative to the thickness middle surface of the shell, and the three electrode assemblies are arranged between the first side surface and the second side surface.

2. The battery cell according to claim 1, wherein the first side surface is located on an outer side of the thickness middle surface, the first side surface comprises two first convex portions, one second convex portion and two first concave portions, the second convex portion is located between the two first concave portions, and the two first convex portions are located on two sides of the two first concave portions;

   the second side surface is located on an inner side of the thickness middle surface, the second side surface comprises two third convex portions and one second concave portion, and the one second concave portion is arranged between the two third convex portions; each of the first convex portions and the one third convex portion are arranged opposite each other, and one electrode assembly is arranged between each of the first convex portions and the one third convex portion; and the second convex portion and the second concave portion are arranged opposite each other, and one electrode assembly is arranged between the second convex portion and the second concave portion.

3. The battery cell according to claim 1 or 2, wherein at two ends in the arrangement direction of the electrode assemblies, the shell further comprises two third side surfaces in an protruding arcuate shape, and the two third side surfaces are respectively connected to the first side surface and the second side surface to form an accommodating space for accommodating the electrode assemblies.

4. The battery cell according to claim 3, wherein the shell further comprises two end surfaces, the two end surfaces are perpendicular to the thickness middle surface of the shell and close the accommodating space, and at least one of the end surfaces is configured to arrange an electrode terminal of the battery cell.

5. A battery, comprising a plurality of battery cells and a box body,

   wherein the box body has a first wall;
   the battery cell comprises a shell and three electrode assemblies wound into cylinders, the three electrode assemblies are arranged in a row in the shell in such a manner that axes of the three electrode assemblies are parallel to one another, the shell has a thickness middle surface connected to the axes of the three electrode assemblies, the thickness middle surface is in a V shape, the shell has a first side surface and a second side surface both in an arcuate wavy shape, the first side surface and the second side surface are opposite each other relative to the thickness middle surface of the shell, and the three electrode assemblies are arranged between the first side surface and the second side surface;

the thickness middle surface of each of the battery cells comprises a first sub-surface and a second sub-surface which intersect each other; and

the plurality of battery cells are arranged in the box body in the following manner:

the first sub-surface of each of the battery cells is parallel to the first wall, and an extension surface of the second sub-surface of each of the battery cells intersects an extension surface of the first wall.

6. The battery according to claim 5, wherein in each of the battery cells, the first side surface is located on an outer side of the thickness middle surface, the first side surface comprises two first convex portions, one second convex portion and two first concave portions, the second convex portion is located between the two first concave portions, and the two first convex portions are located on two sides of the two first concave portions; the second side surface is located on an inner side of the thickness middle surface, the second side surface comprises two third convex portions and one second concave portion, and the one second concave portion is arranged between the two third convex portions; each of the first convex portions and one third convex portion are arranged opposite each other, and one electrode assembly is arranged between each of the first convex portions and one third convex portion; and the second convex portion and the second concave portion are arranged opposite each other, and one electrode assembly is arranged between the second convex portion and the second concave portion.

7. The battery according to claim 6, wherein the plurality of battery cells comprise a plurality of battery cell combinations, each of the battery cell combinations comprises two matched battery cells, in the battery cell combination, one first convex portion of each of the battery cells is embedded in the second concave portion of another battery cell, the first sub-surfaces of the two matched battery cells are parallel to each other, and the second sub-surfaces of the two matched battery cells are parallel to each other.

8. The battery according to claim 7, wherein the plurality of battery cell combinations are arranged in a column in the direction parallel to the first wall; the plurality of battery cell combinations are arranged in a row in the direction perpendicular to the first wall; and the box body is internally provided with a plurality of rows and columns of battery cell combinations.

9. The battery according to claim 8, further comprising a heat exchange element, wherein the heat exchange element comprises two heat exchange surfaces in an arcuate wavy shape, and each of two sides of the heat exchange element is provided with one column of battery cell combinations and is in heat exchange cooperation with the corresponding column of battery cell combinations.

10. The battery according to claim 9, wherein part of the surface of the first side surface of one battery cell of each of the battery cell combinations that is opposite the first sub-surface is in heat exchange cooperation with one heat exchange surface of the heat exchange element.

11. The battery according to claim 6, wherein at two ends in the arrangement direction of the electrode assemblies, the shell further comprises two protruding arcuate third side surfaces, and the two third side surfaces are respectively connected to the first side surface and the second side surface to form an accommodating space for accommodating the electrode assemblies.

12. The battery according to claim 11, wherein the shells further comprises two end surfaces, the two end surfaces are perpendicular to the thickness middle surface of the shell and close the accommodating space, and at least one of the end surfaces is configured to arrange an electrode terminal of the battery cell.

13. The battery according to claim 5, wherein the first wall is a bottom wall or a side wall of the box body.

14. A battery, comprising a box body and a plurality of battery cells, wherein the plurality of battery cells are arranged in the box body; the battery cell comprises a shell and n electrode assemblies wound into cylinders, n ≥ 2, these electrode assemblies are arranged in a row in the shell in such a manner that axes of these electrode assemblies are parallel to one another, the shell has two arcuate wavy first side surfaces, the two first side surfaces are opposite each other relative to a thickness middle surface of the shell, the row of electrode assemblies are arranged between the two first side surfaces, the two first side surfaces are respectively provided with convex portions and concave portions in turn, one electrode assembly is arranged between every two opposite convex portions, and every two opposite concave portions are opposite each other at the junction of the two adjacent electrode assemblies; the box body comprises a first wall; and the thickness middle surface of the battery cell is a plane, and an extension surface of the plane intersects an extension surface of the first wall.

15. The battery according to claim 14, wherein the plane intersects the first wall at an acute angle, and the acute angle is in a range of 45° - 75°.

16. The battery according to claim 14 or 15, further comprising a heat exchange element, wherein the heat exchange element comprises two heat exchange surfaces in an arcuate wavy shape, and two sides of the heat exchange element are respectively provided with the battery cells; and one first side surface of each of the battery cells is in heat exchange cooperation with one heat exchange surface of the heat exchange element.

17. The battery according to claim 16, wherein planes where lower edges, facing the first wall, of the two battery cells on the two sides of the heat exchange elements are located are parallel to the first wall.

18. The battery according to claim 5, wherein the first wall is a bottom wall or a side wall of the box body.

FIG. 1

**FIG. 2**

**FIG. 3**

**FIG. 4**

**FIG. 5**

**FIG. 6**

200

201

**FIG. 7**

300

301

A — A

**FIG. 8**

301

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

## INTERNATIONAL SEARCH REPORT

| International application No. |
|---|
| **PCT/CN2022/073928** |

**A. CLASSIFICATION OF SUBJECT MATTER**

H01M 50/102(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电池, 电芯, 电极组件, 卷绕体, 卷绕组件, 电池组, 电池模块, 电池模组, 电池块, 圆, 柱, 筒, 波, 浪, 弧, battery, cell, core, assembly, module, unit, cylinder, column, wave, arc

**C. DOCUMENTS CONSIDERED TO BE RELEVANT**

| Category* | Citation of document, with indication, where appropriate, of the relevant passages | Relevant to claim No. |
|---|---|---|
| X | CN 107223287 A (A123 SYSTEMS LLC.) 29 September 2017 (2017-09-29) description, paragraphs 21-49, and figures 1-8 | 1-13 |
| Y | CN 112290128 A (HEFEI GUOXUAN HIGH-TECH POWER ENERGY CO., LTD.) 29 January 2021 (2021-01-29) description, paragraphs 25-33, and figures 2-3 | 14-18 |
| Y | CN 1282116 A (JAPAN STORAGE BATTERY CO., LTD.) 31 January 2001 (2001-01-31) description, pages 3-5, and figure 1 | 14-18 |
| A | CN 206742461 U (DONGGUAN WOTAITONG NEW ENERGY CO., LTD.) 12 December 2017 (2017-12-12) entire document | 1-18 |
| A | JP 2017073326 A (FDK CORP.) 13 April 2017 (2017-04-13) entire document | 1-18 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 October 2022** | **27 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

| International application No. |
| --- |
| **PCT/CN2022/073928** |

| Patent document cited in search report | | | Publication date (day/month/year) | Patent family member(s) | | | Publication date (day/month/year) |
| --- | --- | --- | --- | --- | --- | --- | --- |
| CN | 107223287 | A | 29 September 2017 | TW | 201633585 | A | 16 September 2016 |
| | | | | US | 2016172642 | A1 | 16 June 2016 |
| | | | | CA | 2971208 | A1 | 23 June 2016 |
| | | | | JP | 2020080311 | A | 28 May 2020 |
| | | | | EP | 3235024 | A1 | 25 October 2017 |
| | | | | JP | 2018503227 | A | 01 February 2018 |
| | | | | WO | 2016100399 | A1 | 23 June 2016 |
| | | | | KR | 20170093956 | A | 16 August 2017 |
| CN | 112290128 | A | 29 January 2021 | None | | | |
| CN | 1282116 | A | 31 January 2001 | KR | 20010039734 | A | 15 May 2001 |
| | | | | EP | 1071152 | A1 | 24 January 2001 |
| | | | | JP | 2001035461 | A | 09 February 2001 |
| | | | | US | 6495282 | B1 | 17 December 2002 |
| CN | 206742461 | U | 12 December 2017 | None | | | |
| JP | 2017073326 | A | 13 April 2017 | None | | | |

Form PCT/ISA/210 (patent family annex) (January 2015)